# EUROPEAN PATENT APPLICATION

(11) **EP 4 813 697 A1**
(43) Date of publication of application: **30.09.2026**
(21) Application number: 26163784.7
(22) Date of filing: 10.03.2026
(51) Int. Cl.: B60K 1/04

(54) **BATTERY MOUNTING STRUCTURE FOR VEHICLE**

(30) Priority: 26.03.2025 JP 2025052328
(71) Applicant: Toyota Jidosha Kabushiki Kaisha, Toyota-shi, Aichi-ken 471-8571 (JP)
(72) Inventor: KAMINAGA, Takuki, TOYOTA-SHI, AICHI-KEN, 471-8571 (JP); HAYASHI, Yosuke, KARIYA, AICHI-KEN, 448-8650 (JP)
(74) Representative: Cabinet Beau de Loménie

(57) **Abstract**

A battery mounting structure for a vehicle includes: an upper cover (12A) that is arranged above a power storage cell (10); a device (100, 110) that is partially arranged above the power storage cell (10) and the upper cover (12A) and that is electrically connected to the power storage cell (10); a device (100, 110) pedestal at which the device (100, 110) is mounted; a plate-shaped resin member (16) that is arranged between the power storage cell (10) and the upper cover (12A) and that includes a thin-walled portion (16A) below the device (100, 110), an upper face of the thin-walled portion (16A) being lower than an upper face of other portions of the resin member; and a recess that is formed at the upper cover (12A) and that is recessed downward above the thin-walled portion (16A).

## Description

### BACKGROUND

### Technical Field

The present disclosure relates to a battery mounting structure for a vehicle.

### Related Art

Japanese Patent Application Laid-Open (JP-A) No. 2018-202946 discloses a configuration in which a battery stack is covered by a floor pan that forms a floor face of a vehicle cabin. Furthermore, a configuration in which a plate-shaped member is interposed between the battery stack and the floor pan is also disclosed.

Meanwhile, in a layout of a vehicle interior space, there are cases in which a device that is electrically connected to a power storage cell is arranged above the power storage cell configuring the battery stack. In such a case, for example, when the device generates heat, there is a possibility that the heat will be transmitted from the device to the power storage cell via the plate-shaped member or the like.

### SUMMARY

The present disclosure provides a battery mounting structure for a vehicle that is capable of suppressing an influence of heat from a device on a power storage cell above which the device is arranged.

A battery mounting structure for a vehicle according to a first aspect includes: an upper cover that is arranged above a power storage cell; a device that is partially arranged above the power storage cell and the upper cover and that is electrically connected to the power storage cell; a device pedestal at which the device is mounted; a plate-shaped resin member that is arranged between the power storage cell and the upper cover and that includes a thin-walled portion below the device, an upper face of the thin-walled portion being lower than an upper face of another portion of the resin member; and a recess that is formed at the upper cover and that is recessed downward above the thin-walled portion.

In the battery mounting structure for a vehicle according to the first aspect, when the device is driven, heat that has been generated accompanying the driving is dissipated to the device pedestal. Further, the recess that is recessed downward is formed at the upper cover of the power storage cell that is arranged below the device pedestal. The recess is formed above the thin-walled portion of the resin member. In other words, space for forming the recess at the upper cover is formed by the thin-walled portion of the resin member.

Due to the thin-walled portion and the recess, a space is secured between the device pedestal and the upper cover. As a result, transmission of heat from the device pedestal to the power storage cell via the upper cover is suppressed, and partial heating of the power storage cell is suppressed.

Furthermore, due to the space secured by the thin-walled portion and the recess, transmission of heat that has been generated accompanying driving of the power storage cell to the device pedestal via the upper cover is suppressed. For this reason, in a case in which, for example, the device is not driven, partial cooling of the power storage cell is suppressed.

Thus, in the battery mounting structure for a vehicle, since transmission of heat between the device and the power storage cell is suppressed by the thin-walled portion of the resin member and the recess of the upper cover, influence of heat from the device on the power storage cell can be suppressed.

Furthermore, a load that is partially exerted on the upper cover is dispersed by the resin member. As a result, exertion of a localized load on the power storage cell can be suppressed.

A battery mounting structure for a vehicle according to a second aspect is the battery mounting structure for a vehicle according to the first aspect, wherein heat insulation is carried out between the device pedestal and the upper cover below the device, by an air layer that is communicated with the recess.

In the battery mounting structure for a vehicle according to the second aspect, an effect of suppressing transmission of heat due to the thin-walled portion of the resin member and the recess of the upper cover is increased by the air layer.

A battery mounting structure for a vehicle according to a third aspect is the battery mounting structure for a vehicle according to the second aspect, wherein a protrusion that protrudes out downward toward the air layer is formed at a lower face of the device pedestal.

In the battery mounting structure for a vehicle according to the third aspect, since a surface area of the lower face of the device pedestal becomes larger due to the protrusion, heat can be easily dissipated from the device pedestal to the air layer. As a result, heat can be more easily dissipated from the device to the device pedestal as compared to a case in which the protrusion is not provided. Meanwhile, since air has a smaller thermal conductivity than resin or metal, heat that has been dissipated from the device pedestal is less likely to be transmitted to the upper cover.

A battery mounting structure for a vehicle according to a fourth aspect is the battery mounting structure for a vehicle according to the third aspect, wherein the protrusion is formed in a lattice shape along a vehicle width direction and a vehicle front-rear direction.

In the battery mounting structure for a vehicle according to the fourth aspect, the surface area of the lower face of the device pedestal is more easily formed so as to be large as compared with a case in which the protrusion has a rib shape along the vehicle width direction or a rib shape along the vehicle front-rear direction.

A battery mounting structure for a vehicle according to a fifth aspect is the battery mounting structure for a vehicle according to the third aspect or the fourth aspect, wherein the protrusion is formed above the recess.

In the battery mounting structure for a vehicle according to the fifth aspect, the protrusion can penetrate into the recess. As a result, heat can be more easily dissipated from the device pedestal to air in the air layer and the recess.

According to the present disclosure, an influence of heat from a device on a power storage cell above which the device is arranged can be suppressed.

### BRIEF DESCRIPTION OF THE DRAWINGS

An exemplary embodiment of the present disclosure will be described in detail based on the following figures, wherein:
FIG. 1 is an exploded perspective view illustrating a relevant portion of a battery mounting structure for a vehicle according to the exemplary embodiment of the present disclosure;
FIG. 2 is a side cross-sectional view illustrating an example of the battery mounting structure for a vehicle according to the exemplary embodiment of the present disclosure;
FIG. 3A is a partial enlarged side cross-sectional view illustrating an example of protrusions of a device pedestal and a resin member according to the exemplary embodiment of the present disclosure;
FIG. 3B is a partial enlarged side cross-sectional view illustrating an example of the protrusions of the device pedestal, a recess of an upper cover, and the resin member according to the exemplary embodiment of the present disclosure; and
FIG. 3C is a partial enlarged side cross-sectional view illustrating a modified example of the resin member according to the exemplary embodiment of the present disclosure.

### DETAILED DESCRIPTION

A battery mounting structure for a vehicle according to an exemplary embodiment of the present disclosure will be explained below with reference to the drawings. Constituent elements illustrated in the respective drawings using identical reference numerals are identical constituent elements. However, unless otherwise specified in the specification, each constituent element is not limited to being singular, and a plurality thereof may be provided.

Furthermore, explanation of redundant configurations and reference numerals in the respective drawings may be omitted in some cases. It should be noted that the present disclosure is not limited to the following exemplary embodiment, and can be implemented with appropriate modifications, such as omitting configurations, substituting different configurations, using a combination of one exemplary embodiment and various modified examples, and the like, within the scope of the objects of the present disclosure.

### Vehicle Structure

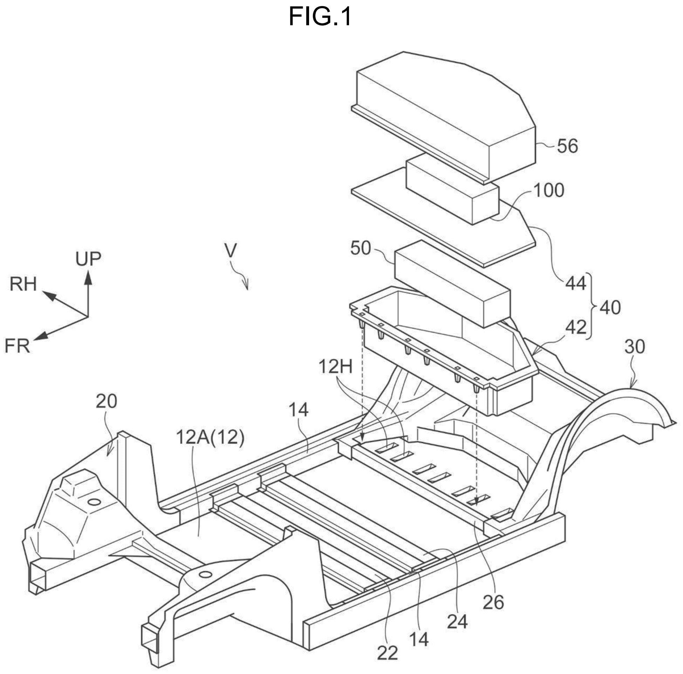

FIG. 1 is a perspective view illustrating a relevant portion of a vehicle V to which the battery mounting structure for a vehicle according to the exemplary embodiment of the present disclosure is applied. Arrow FR, arrow UP, and arrow RH in the drawings respectively indicate a vehicle frontward direction, a vehicle upward direction, and a vehicle rightward direction of the vehicle V.

As shown in FIG. 1, a battery case 12 is provided at a front-rear direction central portion of the vehicle V. The battery case 12 is provided at a lower portion of the vehicle. Furthermore, since an upper face of the battery case 12 configures a vehicle cabin floor portion, a floor panel is not provided at the vehicle V of the present exemplary embodiment.

A left and right pair of rockers 14 that extend in the vehicle front-rear direction are provided at both vehicle width direction sides of the battery case 12. Each rocker 14 is a frame member that is formed in a substantially rectangular closed cross-sectional shape. The battery case 12 is attached to the rockers 14 using fasteners, which are not illustrated in the drawings.

Front end portions of the rockers 14 are connected to a front module 20. Meanwhile, rear end portions of the rockers 14 are connected to a rear module 30. The front module 20 and the rear module 30 are each integrally formed, for example, by casting.

A first cross member 22 and a second cross member 24, which serve as cross members, are provided at vehicle front-rear direction central portions of the rockers 14. The first cross member 22 and the second cross member 24 respectively extend in the vehicle width direction above the battery case 12, and are provided so as to span between the left and right pair of rockers 14. Furthermore, a vehicle seat serving as a front seat, which is not illustrated in the drawings, is attached to the first cross member 22 and the second cross member 24.

Meanwhile, a third cross member 26, which serves as a cross member, is provided at vehicle front-rear direction rear side portions of the rockers 14. The third cross member 26 also extends in the vehicle width direction above the battery case 12, and is provided so as to span between the left and right pair of rockers 14. Detailed configuration of the third cross member 26 will be described later.

### Battery Case

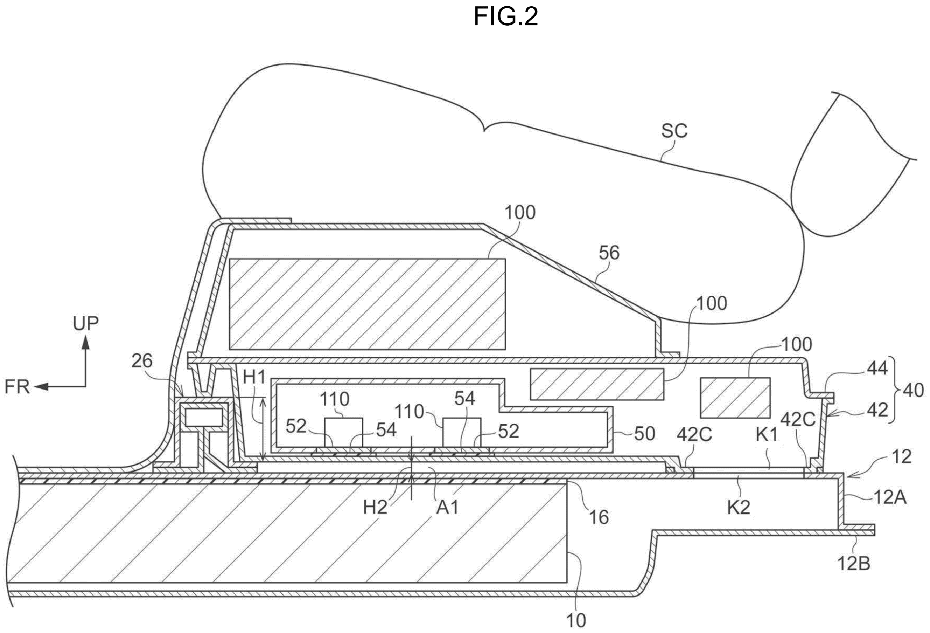

As shown in FIG. 2, the battery case 12 is formed substantially in a box shape including an upper case 12A and a lower case 12B. A battery 10 (power storage cell) is mounted at an interior of the battery case 12.

The upper case 12A is arranged above the battery 10 and is an upper cover that covers the battery 10, and, as described above, an upper face of the upper case 12A configures the vehicle cabin floor portion. An opening portion K2 is formed at a vehicle front-rear direction rear end portion of the upper case 12A. An interior space of the battery case 12 and an interior space of a device case 40, which will be described later, are communicated with each other through the opening portion K2.

It should be noted that the battery case 12 may be configured by only an upper cover that covers above the battery 10. In that case, in place of the lower case 12B, a member that supports the battery 10 from below may be provided.

### Device Case

The device case 40 is arranged above the battery case 12. The device case 40 includes a device pedestal 42 and a lid 44. The device pedestal 42 is a housing that is formed in a box shape with an upper end thereof being open.

Although a material of the device pedestal 42 is not particularly limited, from the viewpoint of improving heat dissipation performance of a heat generating device such as relays 110, which will be described later, a material having a high thermal conductivity such as aluminum or the like is preferable. Furthermore, it is more preferable to use a die-cast member (casting) that is formed by casting aluminum or the like.

The lid 44 is a sealing member that closes an opening portion at an upper end of the device pedestal 42, and is fixed to the device pedestal 42 using a fastening member, which is not illustrated in the drawings.

It should be noted that, in the present disclosure, the device pedestal 42 does not necessarily need to be a casting, and may be formed of a plate material of a metal (for example, aluminum or stainless steel), a resin, or the like. Even if the device pedestal 42 is formed of a metal plate material, a resin, or the like, heat is dissipated from the heat generating device, such as the relays 110 or the like, to the device pedestal 42.

### Junction Box

A junction box 50 that accommodates the heat generating device such as the relays 110 or the like is arranged at an interior of the device case 40. The junction box 50 is mounted at the device pedestal 42 and is fixed to the device pedestal 42 using a fastening member, which is not illustrated in the drawings.

Furthermore, in addition to the junction box 50, auxiliary devices 100 are provided at the interior of the device case 40. The auxiliary devices 100 include, for example, a power distribution unit (PDU), an electronic control unit (ECU), and the like.

The relays 110 and the auxiliary devices 100 are linked to the battery 10 by a bus bar, a wire harness, or the like, which is not shown in the drawings, and are electrically connected to the battery 10. In some cases, the heat generating device such as the relays 110 or the like may be driven by electric power that is supplied from the battery 10 and may generate heat accompanying the driving thereof.

The relays 110 and the junction box 50 are partially arranged above the battery 10 and the upper case 12A. "Partially arranged" means, as one example, arranged at one vehicle front-rear direction portion (for example, at a rear side) of the battery 10, which extends in the vehicle front-rear direction and the width direction.

Opening portions are formed at a bottom of the junction box 50, and heat dissipation sheets 52 are arranged at the opening portions. The relays 110 are arranged above the heat dissipation sheets 52. That is to say, the heat dissipation sheets 52, which are heat conductive members, are arranged between the relays 110 and the device pedestal 42. Heat that is generated when the relays 110 are driven is transmitted to the device pedestal 42 via the heat dissipation sheets 52. Furthermore, insulating sheets 54 are arranged below the heat dissipation sheets 52.

It should be noted that, in the present disclosure, the heat dissipation sheets 52 do not necessarily need to be provided and may be appropriately omitted. In that case, no openings may be formed at the bottom of the junction box 50, and the insulating sheets 54 can also be omitted. Even if the heat dissipation sheets 52 are not provided, heat is transmitted from the relays 110 to the device pedestal 42.

### Auxiliary Device Cover

The auxiliary devices 100 are arranged in multiple stages. Specifically, auxiliary devices 100 are also arranged above the device case 40, and the auxiliary devices 100 are covered by an auxiliary device cover 56. The auxiliary device cover 56 is provided above the device case 40 and supports a seat cushion SC of a vehicle seat serving as a rear seat, from a vehicle lower side. It should be noted that another member may be interposed between the auxiliary device cover 56 and the seat cushion SC.

### Resin Member

A plate-shaped resin member 16 is arranged between the battery 10 and the upper case 12A. The resin member 16 extends in the vehicle front-rear direction and the vehicle width direction and covers the battery 10 from above.

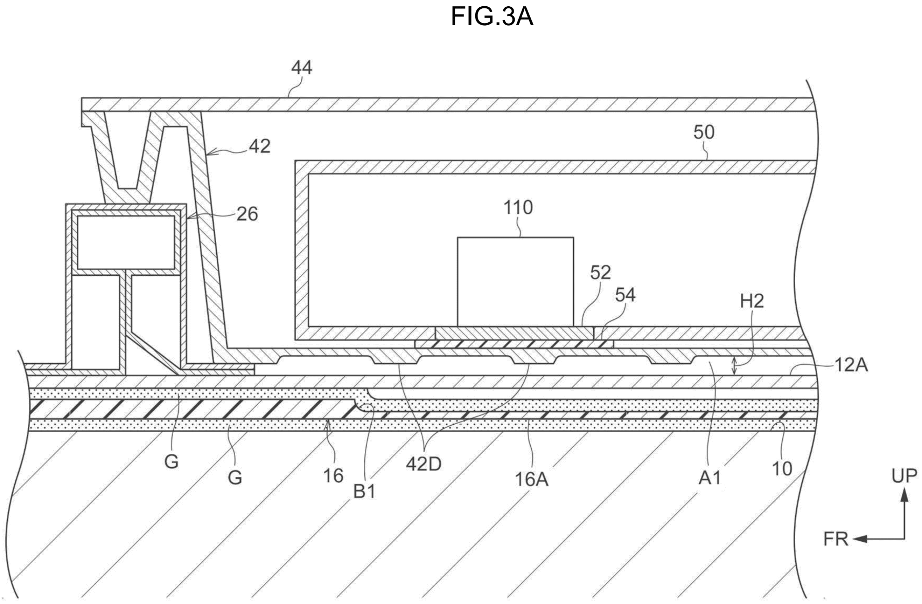

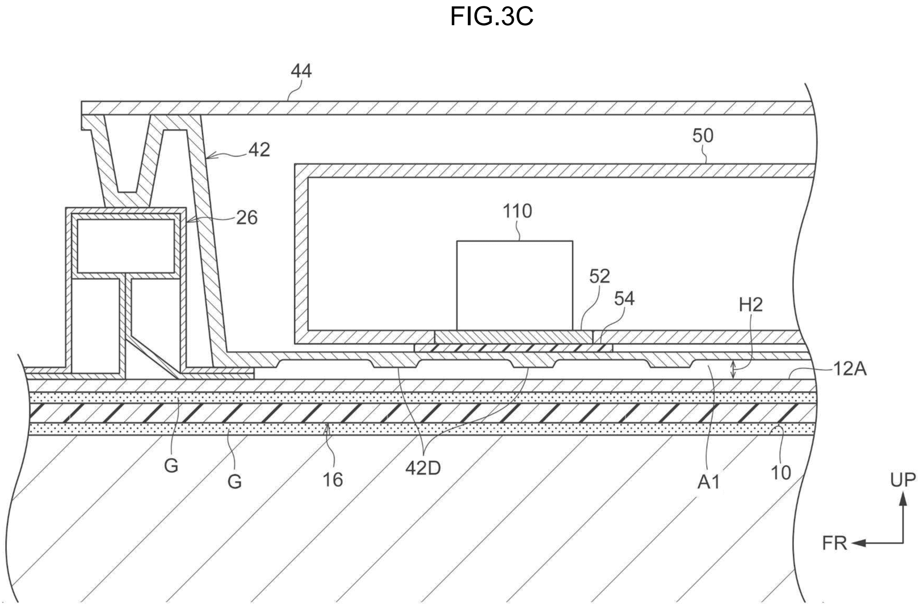

As shown in FIG. 3A, the battery 10 and the resin member 16 are adhered to each other by an adhesive G. Furthermore, the upper case 12A and the resin member 16 are adhered to each other by the adhesive G.

The resin member 16 includes a thin-walled portion 16A, whose upper face is lower than an upper face of other portions of the resin member 16, below the junction box 50 and below the relays 110. It should be noted that the thin-walled portion 16A and the adhesive G are not shown in FIG. 2.

In this regard, as shown in FIG. 1, plural recesses 12H that are recessed downward are formed at the upper case 12A. Although a shape of the recesses 12H is not particularly limited, as one example, each recess 12H is formed in a groove shape by a pair of wall portions that extend downward from the upper face of the upper case 12A and a bottom portion that connects lower end portions of the pair of wall portions. Thus, the plural recesses 12H have groove shapes along the vehicle front-rear direction and are arranged in the vehicle width direction.

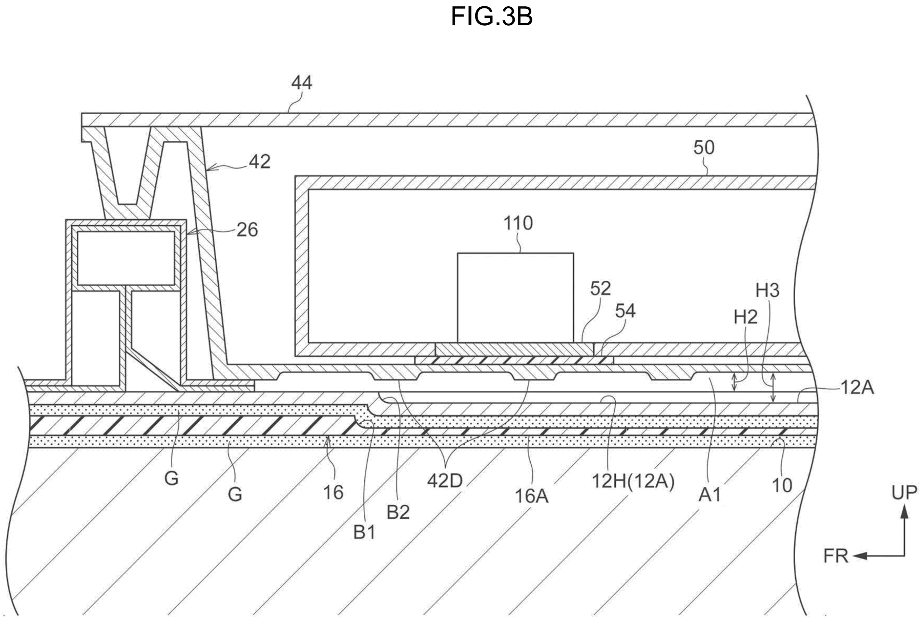

FIG. 3B shows a side cross-section of the upper case 12A at a portion thereof at which the recesses 12H are formed. As shown in this figure, the recesses 12H are formed above the thin-walled portion 16A of the resin member 16. Furthermore, the recesses 12H are formed along a shape of the thin-walled portion 16A.

In this regard, "along a shape of the thin-walled portion 16A" means that a curved portion B1 of the resin member 16 and a curved portion B2 of the upper case 12A have identical shapes or similar shapes in a side view, and are arranged in close proximity to each other. The curved portion B1 is a boundary portion between the thin-walled portion 16A and another portion of the resin member 16. Furthermore, the curved portion B2 is a boundary portion between a recess 12H and another portion of the upper case 12A.

In such an aspect, the recesses 12H of the upper case 12A and the thin-walled portion 16A of the resin member 16 are arranged below the relays 110.

It should be noted that the recesses 12H may have a shape that is not along the shape of the thin-walled portion 16A. The curved portion B1 of the resin member 16 and the curved portion B2 of the upper case 12A may have different shapes and may be arranged so as to be spaced apart from each other.

### Heat Insulation Structure

As shown in FIG. 2, below the relays 110 and below the junction box 50, heat insulation is carried out between the device pedestal 42 and the upper case 12A by an air layer A1.

A fixing portion 42C that protrudes out downward from a bottom face of the device pedestal 42 is formed at the device pedestal 42, and the fixing portion 42C is fixed to the upper case 12A. A thickness H2 of the air layer A1 is equal to a protruding height of the fixing portion 42C. It should be noted that an opening portion K1 that is open above the opening portion K2 of the upper case 12A is formed at the fixing portion 42C.

As shown in FIG. 3B, the air layer A1 is communicated with the recesses 12H of the upper case 12A. For this reason, at portions at which the recesses 12H are formed, a thickness H3 of the communicated air layer becomes greater than the thickness H2 at other portions thereof.

It should be noted that heat insulation performance can also be ensured by filling the air layer A1 with various heat insulating materials such as a fiber-based material, a foamed resin-based material, or the like.

### Heat Dissipation Structure

As shown in FIG. 3A, protrusions 42D that protrude out downward toward the air layer A1 are formed at a lower face of the device pedestal 42. At portions at which the protrusions 42D are formed, a thickness of the device pedestal 42 is greater than that at other portions thereof. Consequently, a heat capacity of the device pedestal 42 becomes greater than in a case in which the protrusions 42D are not provided.

Furthermore, due to the protrusions 42D, a surface area of the lower face of the device pedestal 42 becomes greater than in a case in which the protrusions 42D are not provided. Consequently, heat can easily be dissipated from the device pedestal 42 to the air layer A1.

A protruding height of the protrusions 42D is smaller than the thickness H2 of the air layer A1 (the protruding height of the fixing portion 42C). Consequently, interference between the protrusions 42D and the upper case 12A is avoided.

It should be noted that a shape of the protrusions 42D is not particularly limited, and, for example, they may be formed in rib shapes along the vehicle width direction. Further, the protrusions 42D may be formed in rib shapes along the vehicle front-rear direction. Furthermore, the protrusion 42D may be formed in a lattice shape along the vehicle width direction and the vehicle front-rear direction. Moreover, the protrusions 42D may be formed in dot shapes such as circular shapes or the like.

Sizes, lengths, heights, arrangement positions, a number thereof that are arranged, and the like of the protrusions 42D may be arbitrarily determined. For example, protrusions 42D that are formed in rib shapes along the vehicle front-rear direction can be arranged above the recesses 12H of the upper case 12A. In that case, since the protrusions 42D can penetrate into the recesses 12H, the heights of the protrusions 42D may be greater than the thickness H2 of the air layer A1.

It should be noted that, in the present disclosure, the protrusions 42D do not necessarily need to be provided. For example, in place of the protrusions 42D, recesses that are recessed upward may be provided at the lower face of the device pedestal 42. Alternatively, the lower face of the device pedestal 42 may be formed so as to be flat without providing either of the protrusions 42D or the recesses.

### Operation and Effects

### Heat Insulation and Heat Dissipation Operation

In the battery mounting structure for a vehicle according to the exemplary embodiment of the present disclosure, when a heat generating device, such as the relays 110 shown in FIG. 2 or the like, is driven, heat that has been generated accompanying the driving thereof is dissipated to the device pedestal 42. Then, heat insulation is carried out by air between the device pedestal 42 and the upper case 12A of the battery 10. For this reason, transmission of heat from the device pedestal 42 to the battery 10 via the upper case 12A is suppressed, and partial heating of the battery 10 is suppressed.

Furthermore, due to heat insulation being carried out between the device pedestal 42 and the upper case 12A, transmission of heat that has been generated accompanying driving of the battery 10 to the device pedestal 42 via the upper case 12A is also suppressed. For this reason, when a heat generating device such as the relays 110 or the like is not driven, for example, partial cooling of the battery 10 is suppressed.

As a result, in the battery mounting structure for a vehicle, since transmission of heat between a heat generating device, such as the relays 110 or the like, and the battery 10 is suppressed by the heat insulation, an influence of heat from the device on the battery 10 can be suppressed.

Furthermore, in the battery mounting structure for a vehicle according to the exemplary embodiment of the present disclosure, the heat dissipation sheets 52 serving as heat conductive members are provided between the relays 110 and the device pedestal 42. Consequently, compared to a case in which the heat dissipation sheets 52 are not provided, heat can easily be dissipated from the relays 110 to the device pedestal 42, and overheating of the relays 110 can be suppressed.

Furthermore, in the battery mounting structure for a vehicle according to the exemplary embodiment of the present disclosure, the device pedestal 42 is a casting. Consequently, a thermal conductivity is higher than in a case in which the device pedestal 42 is formed of a metal plate material, a resin, or the like, and heat is easily dissipated from a heat generating device, such as the relays 110 or the like, to the device pedestal 42. As a result, overheating of the heat generating device such as the relays 110 or the like can be suppressed.

Furthermore, in the battery mounting structure for a vehicle according to the exemplary embodiment of the present disclosure, heat insulation is carried out between the device pedestal 42 and the upper case 12A by the air layer A1. The air is a gas, and does not cause interference even if concavities and convexities (for example, the protrusions 42D of the device pedestal 42; refer to FIG. 3A) are provided at the device pedestal 42 or the upper case 12A. As a result, compared to a case in which a heat insulating material is installed, shapes of the device pedestal 42 and the upper case 12A are less likely to be constrained thereby.

Furthermore, since air has a smaller thermal conductivity than resin or metal, heat that has been dissipated from the device pedestal 42 is less likely to be transmitted to the upper case 12A.

### Operation of Recesses

Furthermore, in the battery mounting structure for a vehicle according to the exemplary embodiment of the present disclosure, as shown in FIG. 3B, the upper case 12A is provided with the recesses 12H that are recessed downward, below the relays 110 and the junction box 50. At the recesses 12H, the gap between the device pedestal 42 and the upper case 12A (the thickness H3 of the air layer) becomes wider than that at other portions (the thickness H2 of the air layer). As a result, a heat insulation effect is greater than in a configuration in which the recesses 12H are not provided.

### Operation of Resin Member

Furthermore, in the battery mounting structure for a vehicle according to the exemplary embodiment of the present disclosure, the plate-shaped resin member 16 is arranged between the battery 10 and the upper case 12A. Consequently, a load that is partially exerted on the upper case 12A, which configures the vehicle cabin floor portion, is dispersed by the resin member 16. As a result, exertion of a localized load on the battery 10 can be suppressed.

Further, the resin member 16 includes the thin-walled portion 16A, whose upper face is lower than the upper face of other portions of the resin member 16, below the relays 110 and the junction box 50. Furthermore, the upper case 12A includes the recesses 12H above the thin-walled portion 16A. In other words, space for forming the recesses 12H is formed at the upper case 12A due to the thin-walled portion 16A of the resin member 16.

Since the recesses 12H are formed above the thin-walled portion 16A, a recess dimension can be increased as compared to a case in which they are formed at another portion. Consequently, a heat insulation effect can be increased by the recesses 12H of the upper case 12A while exertion of a localized load on the battery 10 is suppressed by the resin member 16.

### Operation of Protrusions

Furthermore, in the battery mounting structure for a vehicle according to the exemplary embodiment of the present disclosure, the protrusions 42D that protrude out downward toward the air layer A1 are formed at the lower face of the device pedestal 42. Since the surface area of the lower face of the device pedestal 42 becomes larger due to the protrusions 42D, heat can be easily dissipated from the device pedestal 42 to the air layer A1. As a result, heat can be more easily dissipated from a heat generating device, such as the relays 110 or the like, to the device pedestal 42 as compared to a case in which the protrusions 42D are not provided.

Meanwhile, since air has a smaller thermal conductivity than resin or metal, heat that has been dissipated from the device pedestal 42 is less likely to be transmitted from the air layer A1 between the device pedestal 42 and the upper case 12A to the upper case 12A. As a result, transmission of heat to the battery 10 can be suppressed.

It should be noted that, as described above, the shapes of the protrusions 42D are not particularly limited. In a case in which the protrusions 42D are formed in a lattice shape, the surface area of the lower face of the device pedestal 42 can be more easily increased as compared to a case in which they are formed in linear rib shapes or point shapes.

Alternatively, in a case in which the protrusions 42D are formed in rib shapes along the vehicle front-rear direction, the protrusions 42D can be arranged above the recesses 12H. At that time, the protrusions 42D can penetrate into the recesses 12H. As a result, heat is more easily dissipated from the device pedestal 42 to air in the air layer A1 and the recesses 12H.

It should be noted that, although heat insultation is carried out between the device pedestal 42 and the upper case 12A by the air layer A1 that is communicated with the recesses 12H in the above-described exemplary embodiment, the exemplary embodiment of the present disclosure is not limited thereto. For example, such an air layer A1 does not need to be formed. That is to say, the device pedestal 42 and the upper case 12A may be arranged so as to be in contact with each other.

Even in such a case, if the thin-walled portion 16A is provided at the resin member 16 and the recesses 12H are formed at the upper case 12A, a space is secured between the device pedestal 42 and the upper case 12A due to the thin-walled portion 16A and the recesses 12H. As a result, transmission of heat from the device pedestal 42 to the battery 10 via the upper case 12A is suppressed, and partial heating of the battery 10 is suppressed.

Similarly, transmission of heat that has been generated accompanying driving of the battery 10 to the device pedestal 42 via the upper case 12A is suppressed. For this reason, in a case in which, for example, the device is not driven, partial cooling of the battery 10 is suppressed.

## Claims

1. A battery mounting structure for a vehicle, comprising:
an upper cover (12A) configured to be arranged above a power storage cell (10);
a device (100, 110) configured to be partially arranged above the power storage cell (10) and the upper cover (12A) and configured to be electrically connected to the power storage cell (10);
a device pedestal (42) at which the device (100, 110) is mounted;
a plate-shaped resin member (16) configured to be arranged between the power storage cell (10) and the upper cover (12A) and that includes a thin-walled portion (16A) below the device (100, 110), an upper face of the thin-walled portion (16A) being lower than an upper face of other portions of the resin member (16); and
a recess (12H) that is formed at the upper cover (12A) and that is recessed downward above the thin-walled portion (16A).

2. The battery mounting structure for a vehicle according to claim 1, wherein heat insulation is carried out, between the device pedestal (42) and the upper cover (12A) below the device (100, 110), by an air layer (A1) that is communicated with the recess (12H).

3. The battery mounting structure for a vehicle according to claim 2, wherein a protrusion (42D) that protrudes out downward toward the air layer (A1) is formed at a lower face of the device pedestal (42).

4. The battery mounting structure for a vehicle according to claim 3, wherein the protrusion (42D) is formed in a lattice shape along a vehicle width direction and a vehicle front-rear direction.

5. The battery mounting structure for a vehicle according to claim 3 or claim 4, wherein the protrusion (42D) is formed above the recess (12H).
